# EUROPÄISCHE PATENTANMELDUNG

(11) **EP 2 952 422 A1**
(43) Veröffentlichungstag der Anmeldung: **09.12.2015**
(21) Anmeldenummer: 15401056.5
(22) Anmeldetag: 02.06.2015
(51) Int. Cl.: B62K 27/00, A01C 15/00

(54) **SEITENWAGEN FÜR MOTORRÄDER**

(30) Priorität: 02.06.2014 DE 102014107720
(71) Anmelder: Keller Blechtechnik GmbH, 79346 Endingen a.K. (DE)
(72) Erfinder: Roth, Dieter, 79341 Kenzingen (DE)
(74) Vertreter: Sprenger, Gerrit Lars Eike

(57) **Zusammenfassung**

Die Erfindung betrifft einen Seitenwagen für Motorräder mit einem Rahmen (1), der wenigstens ein Befestigungselement (2) zur Befestigung an einem Motorradrahmen (3) aufweist. Dabei weist der Rahmen (1) drei Rahmenbauteile (4, 5, 6) auf, wobei das dritte Rahmenbauteil (6) das erste Rahmenbauteil (4) und das zweite Rahmenbauteil (5) an deren oberen Ende miteinander verbindet, wobei zwischen dem ersten Rahmenbauteil (4) und dem zweiten Rahmenbauteil (5) unterhalb des dritten Rahmenbauteils (6) ein Freiraum (7) gebildet ist. Der Rahmen (1) weist dabei wenigstens eine Aufnahme (8) für ein land-, garten- oder forstwirtschaftliches Gerät (9) auf, welches während des Betriebes des Seitenwagens betrieben werden kann und zur Bearbeitung von hochwachsenden Pflanzen, die in dem Freiraum (7) aufnehmbar sind, ausgebildet ist.

## Beschreibung

Die Erfindung betrifft einen Seitenwagen für Motorräder nach dem Oberbegriff des Patentanspruchs 1. Ferner betrifft die Erfindung ein Motorrad mit einem solchen Seitenwagen.

Es ist allgemein bekannt, Motorräder mit Seitenwagen zu versehen, damit darin Personen und/oder Waren im Straßenverkehr transportiert werden können.

Weiterhin ist es in der Land-, Garten- und Forstwirtschaft bekannt, bestellte oder zu bestellende Agrar- oder Forstflächen mit schweren, technisch aufwendigen und kostenintensiven Maschinen, wie beispielsweise Traktoren, Schleppern und daran anhängbare Maschinen und Geräte zu bearbeiten. Insbesondere ist derzeit in der Landwirtschaft wieder der Trend zu erkennen, Schädlingsbekämpfung auf biologischem Wege und nicht mit chemischen Mitteln zu betreiben. Ein derartiges Verfahren zur biologischen Bekämpfung von Schädlingsorganismen in einem land-, garten- oder forstwirtschaftlichen Pflanzenbestand durch Ausbringen von Nützlingsorganismen ist beispielsweise in der DE 10 2010 044 601 A1 beschrieben. Dabei werden diese Nützlingsorganismen in Form von schlupffähigen Eiern der Nützlingsorganismen auf ein Trägersubstrat aufgebracht, welches biologisch abbaubar ist und welches von einem Fahrzeug aus auf eine entsprechend zu behandelnde Agrarfläche aufgebracht wird.

Wie bereits erwähnt, erfolgt ein derartiges Aufbringen in der Regel durch die bekannten Kraftfahrzeuge in Form von Traktoren und Schleppern und insbesondere bei einer Durchfahrt in hochwachsenden Kulturen durch Stelzenschlepper und wie in der zuvor genannten Druckschrift beschrieben auch aus einem Luftfahrzeug heraus. Allen diesen Aufbringungsarten ist gemein, dass dazu technisch sehr aufwendige und in ihrer Anschaffung kostenintensive Fahrzeuge benötigt werden.

Aus den Druckschriften DE 388 341 A, DE 909 400 B, DE 198 20 838 A1 und US 4,415,056 A sind Motorräder mit seitenwagenähnlichen Vorrichtungen bekannt, um in der Land-, Garten- und Forstwirtschaft eingesetzt zu werden. Dabei weisen diese Motorräder landwirtschaftliche Vorrichtungen zur Bodenbearbeitung auf, wie beispielsweise eine Pflugvorrichtung zum Bearbeiten des Bodens oder eine Erntevorrichtung zum Abernten des Pflanzbestandes. Diese seitenwagenähnlichen Vorrichtungen dienen dabei in erster Linie dazu, dass Motorrad bei entsprechend langsamer Fahrt abzustützen und einem Umkippen des Motorrades vorzubeugen.

Es ist daher Aufgabe der Erfindung, eine Vorrichtung zur Verfügung zu stellen, mit der eine Bearbeitung eines land-, garten- oder forstwirtschaftlichen Pflanzenbestandes mit technisch deutlich einfacheren Mitteln und infolge dessen auch deutlich weniger kostenintensiv durchführbar ist.

Gelöst wird diese Aufgabe durch einen Seitenwagen mit allen Merkmalen des Patentanspruchs 1. Ferner wird diese Aufgabe gelöst durch ein Motorrad mit allen Merkmalen des Patentanspruchs 7. Vorteilhafte Ausgestaltungen der Erfindung finden sich in den Unteransprüchen.

Der erfindungsgemäße Seitenwagen für Motorräder weist dabei einen Rahmen auf, der wenigstens ein Befestigungselement zur Befestigung an einem Motorradrahmen aufweist. Der Seitenwagen zeichnet sich dadurch aus, dass der Rahmen drei Rahmenbauteile aufweist, wobei das dritte Rahmenbauteil das erste Rahmenbauteil das zweite Rahmenbauteil an deren oberen Ende miteinander verbindet, wobei zwischen dem ersten Rahmenbauteil und dem zweiten Rahmenbauteil unterhalb des dritten Rahmenbauteils ein Freiraum gebildet ist. Dabei können die Verbindungen zwischen dem dritten Rahmenbauteil und den beiden anderen Rahmenbauteilen fest sein. Es ist allerdings auch denkbar, dass durch diese Verbindungen die Rahmenbauteile gegeneinander verschwenkbar ausgebildet sein können, wobei die Rahmenbauteile aber für den Betrieb des erfindungsgemäßen Seitenwagens gegeneinander fixiert werden. Der Freiraum unter dem dritten Rahmenbauteil ist dabei an die Höhe der zu bearbeitenden beziehungsweise zu behandelnden Pflanzen angepasst. Insbesondere kann dieser Freiraum zwischen dem dritten Rahmenbauteil und dem Boden, auf dem der Seitenwagen samt Motorrad fährt, bei Mais und dergleichen hochwachsenden Pflanzen 180 cm und mehr betragen. Die Breite des Freiraums, also der Abstand zwischen ersten Rahmenbauteil und zweitem Rahmenbauteil beziehungsweise Motorrad kann dabei 70 cm und mehr betragen.

Wird der erfindungsgemäße Seitenwagen nun mit einem Motorrad verbunden, ist es in einfacher Weise nunmehr möglich, eine Durchfahrt durch hochwachsenden Pflanzkulturen/Pflanzbeständen zu realisieren, ohne die Pflanzkulturen beziehungsweise Pflanzbestände dadurch beziehungsweise durch das Motorrad beziehungsweise den Seitenwagen zu beschädigen. Dies geschieht dadurch, dass das Motorrad mit dem daran angeordneten Seitenwagen derart durch die Pflanzbestände, insbesondere durch hochwachsende Pflanzbestände, fahren kann, wobei sowohl das Motorrad zwischen zwei Reihen des Pflanzenbestandes als auch der Seitenwagen mit seinem wenigstens einem Rad zwischen zwei anderen Reihen des Pflanzenbestandes hindurchfahren kann, ohne die Pflanzen dabei zu beschädigen. Zwischen dem ersten und dem zweiten Rahmenbauteil des Rahmens des Seitenwagens werden dabei die entsprechenden Pflanzenbestände, insbesondere hochwachsende Pflanzenbestände durchgeführt, ohne dass sie die obere Begrenzung des Rahmens des Seitenwagens in Form des dritten Rahmenbauteils berühren.

Insofern kann daher mit der Erfindung kostengünstig eine Bearbeitung, insbesondere Bearbeitung von hochwachsenden Pflanzenbeständen durchgeführt werden, ohne auf technisch aufwendige und teure Schlepper, insbesondere Stelzenschlepper oder aber auch Flugfahrzeuge zurückgreifen zu müssen.

Dabei weist der Rahmen des Seitenwagens dabei wenigstens eine Aufnahme für ein land-, garten- oder forstwirtschaftliches Gerät auf, welches während des Betriebes des Seitenwagens betrieben werden kann. Mit einem derartigen Gerät können die gewünschten Bearbeitungen des Pflanzenbestandes in einfacher Weise mit technisch einfachen Mitteln kostengünstig durchgeführt werden.

Nach einer ersten vorteilhaften Ausgestaltung der Erfindung hat sich zur biologischen Bekämpfung von Schädlingen die Ausbildung dieses land-, garten- oder forstwirtschaftlichen Gerätes als Kapselwerfer bewährt. Ein typisches Anwendungsbeispiel ist dabei das Ausbringen von Eiern der Schlupfwespe Trichogramma in Maisbestände zur Bekämpfung des Maiszünslers durch aus den Eiern schlüpfenden, den Maiszünsler parasitierende Schlupfwespenlarven. Diese Schlupfwespenlarven sind dabei auf einem Trägersubstrat in Form von Pellets beziehungsweise Kapseln angeordnet, die mit einem derartigen Kapselwerfer, der auf dem erfindungsgemäßen Seitenwagen angeordnet ist, auf der Agrarfläche beziehungsweise dem Maisfeld ausgebracht werden können, auch wenn die Pflanzen auf der Agrarfläche beziehungsweise die Maispflanzen bereits eine Höhe von mehr als 150 cm erreicht haben.

Allerdings ist die Anwendung des erfindungsgemäßen Seitenwagens nicht auf die biologische Schädlingsbekämpfung beschränkt. Vielmehr kann damit auch eine Vielzahl anderer land-, garten- und forstwirtschaftliche Aufgaben in derartigen Pflanzbeständen beziehungsweise Pflanzkulturen durchgeführt werden. Dabei sind durch die besonders schmale Ausbildung des Seitenwagens mit seinen Rahmenteilen und des damit verbindbaren Motorrades keine größeren Beschädigungen des Pflanzbestandes zu erwarten, wie dies gegebenenfalls bei schweren Schleppern der Fall sein kann. Auch ist nicht der Einsatz von technisch aufwendigen und kostenintensiven Fahrzeugen wie Stelzenschleppern und Flugfahrzeugen vermieden. Insbesondere können mit dem erfindungsgemäßen Seitenwagen auch nicht biologische Schädlingsbekämpfungen in Form von anderen auch chemischen Pflanzenschutzanwendungen sowie Düngemaßnahmen sehr gezielt und für den Pflanzbestand sehr individuell für die einzelne Pflanze durchgeführt werden. Ferner ist es auch möglich, mit einer derartigen Vorrichtung Pflege- und Ernteaufgaben durchzuführen.

Da der Betrieb der auf dem Seitenwagen in der Aufnahme aufzunehmenden landwirtschaftlichen Geräte, wie beispielsweise der zuvor beschriebene Kapselwerfer, in der Regel sehr energieintensiv ist, ist es erfindungsgemäß vorgesehen, dass der Rahmen zur Aufnahme eines Energiespeichers für elektrische Energie und/oder eines Stromaggregates ausgebildet ist. Mithilfe dieses Energiespeichers beziehungsweise dieses Stromaggregates ist es nunmehr möglich, die für den Betrieb des Gerätes notwendige elektrische Energie zur Verfügung zu stellen. Es ist natürlich auch möglich, einen Elektromotor oder einen Verbrennungsmotor auf dem Seitenwagen anzuordnen, der ein entsprechendes landwirtschaftliches Gerät beispielsweise ein Schneid- oder Mähgerät oder dergleichen antreibt.

Nach einem anderen Gedanken der Erfindung weist der Seitenwagen wenigstens ein Rad auf, welches vorzugsweise motorisch antreibbar ausgebildet ist und das vorzugsweise mit dem Antrieb des mit dem Seitenwagen verbindbaren Motorrades synchronisierbar ist. Hierdurch ist es möglich, dass die Räder des Motorrades und des Seitenwagens im Wesentlichen synchron laufen, sodass keine Ausgleichsbewegungen mittels des Lenkers des Motorrades notwendig sind.

Dabei kann das wenigstens ein Rad des Seitenwagens und/oder das land-, gartenoder forstwirtschaftliches Gerät elektrisch, hydraulisch, pneumatisch oder mechanisch antreibbar ausgebildet sein. Allerdings ist es auch möglich, den Antrieb der Räder des mit dem Seitewagen zu verbindenden Motorrades elektrisch, hydraulisch, pneumatisch oder mechanisch auszubilden.

Damit der erfindungsgemäße Seitenwagen auf die Höhe beziehungsweise Breite der zu bearbeitenden Pflanzbestände beziehungsweise Pflanzkulturen angepasst werden kann, ist der Rahmen des Seitenwagens mit seinem ersten Rahmenbauteil und/oder seinem zweiten Rahmenbauteil höhenverstellbar und/oder mit seinem dritten Rahmenbauteil in seiner Breite verstellbar. Dabei sind diese Höhen- beziehungsweise Breitenverstellungen vorzugsweise elektrisch, hydraulisch, pneumatisch oder mechanisch durchführbar, wobei dafür entsprechende Einrichtungen an dem Seitenwagen vorgesehen sind.

Wie bereits eingangs erwähnt soll durch die Erfindung auch ein Motorrad mit einem zuvor beschriebenen Seitenwagen geschützt sein.

Damit der personelle Aufwand zum Betrieb des Motorrades gering gehalten werden kann, ist es erfindungsgemäß auch vorgesehen, das Motorrad zum autonomen und/oder ferngesteuerten Betrieb auszubilden. Hierdurch ist es ermöglicht, dass das Motorrad mit seinem Seitenwagen die ihm übertragenen Aufgaben selbsttätig oder durch eine Fernsteuerung ohne einen Fahrzeugführer auf dem Motorrad durchführt.

Damit ein einfacher ferngesteuerter beziehungsweise autonomer Betrieb des Motorrades mit seinem Seitenwagen möglich ist, hat es sich als vorteilhaft erwiesen, dass entweder das Motorrad oder der Seitenwagen mit einem GPS-Empfänger ausgestattet ist, der mit einem entsprechenden Navigationssystem des Motorrades beziehungsweise des Seitenwagens kommuniziert und so die gewünschte Bearbeitung des Pflanzbestandes beziehungsweise der Pflanzkulturen durchführt.

Sofern kein ferngesteuerter oder autonomer Betrieb des Motorrades stattfindet, sondern der Betrieb durch einen Fahrzeugführer auf dem Motorrad durchgeführt wird, hat es sich als vorteilhaft erwiesen, dass die das Vorderrad des Motorrades tragende Vordergabel und/oder die das Hinterrad des Motorrades tragende Hintergabel höhenverstellbar ausgebildet ist. Dies hat den Vorteil, dass die Höhe des Motorrades an die Höhe des Pflanzbestandes beziehungsweise der Pflanzkulturen angepasst werden kann, sodass der Fahrzeugführer einen guten Überblick über den Pflanzbestand beziehungsweise die Pflanzkulturen hat.

Insbesondere soll auch daher auch die Lenkeinheit beziehungsweise der Lenker und/oder die Sitzvorrichtung für den Fahrzeugführer höhenverstellbar ausgebildet sein, damit diese an die höhenverstellbaren Vorderrad- und/oder Hinterradgabeln angepasst werden können. Alternativ kann natürlich auch vorgesehen sein, dass die Lenkeinheit und/oder die Sitzvorrichtung für den Fahrzeugführer unabhängig von der Vorderradund/oder Hinterradgabel höhenverstellbar ausgebildet sein.

Weitere Ziele, Vorteile, Merkmale und Anwendungsmöglichkeiten der vorliegenden Erfindung ergeben sich aus der nachfolgenden Beschreibung eines Ausführungsbeispiels anhand der Zeichnungen. Dabei bilden alle beschriebenen und/oder bildlich dargestellten Merkmale für sich oder in beliebiger sinnvoller Kombination den Gegenstand der vorliegenden Erfindung, auch unabhängig von ihrer Zusammenfassung in den Ansprüchen oder deren Rückbeziehung.

Es zeigen:
- Figur 1:: ein Ausführungsbeispiel eines erfindungsgemäßen Motorrades mit einem daran angeordneten Ausführungsbeispiel eines erfindungsgemäßen Seitenwagens in einer Ansicht von hinten und
- Figur 2:: ein Ausführungsbeispiel eines erfindungsgemäßen Motorrades.

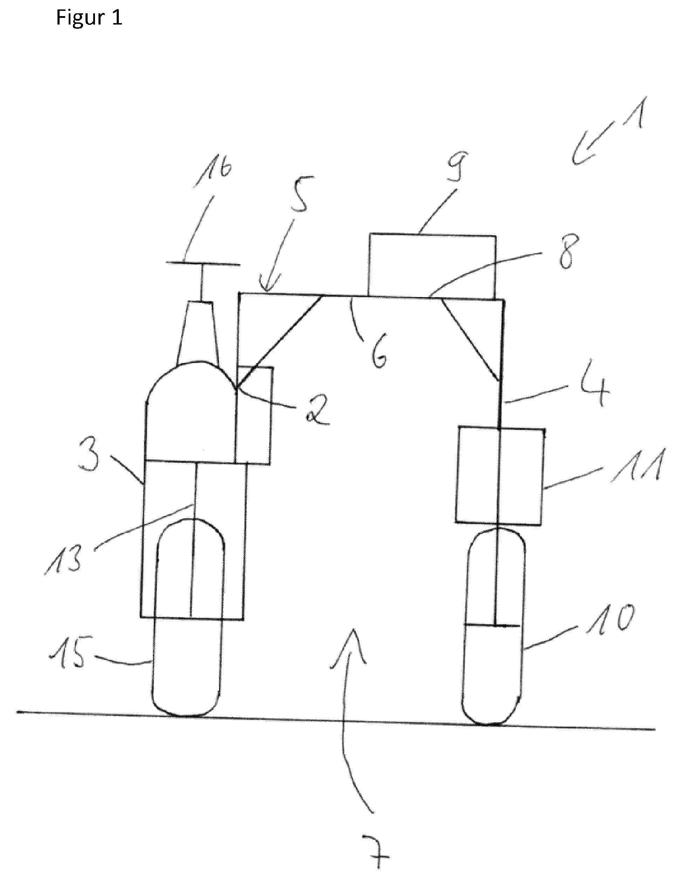

In der Figur 1 ist ein mögliches Ausführungsbeispiel eines erfindungsgemäßen Seitenwagens in einer Ansicht von hinten dargestellt, wobei dieser Seitenwagen an einem Ausführungsbeispiel eines erfindungsgemäßen Motorrades angeordnet ist.

Der Seitenwagen der Figur 1 weist dabei einen Rahmen 1 auf, der im Wesentlichen aus einem ersten Rahmenbauteil 4, einem zweiten Rahmenbauteil 5 und einem dritten Rahmenbauteil 6 gebildet ist. Am unteren Ende des ersten Rahmenbauteils 4 ist dabei ein Rad 10 für den Seitenwagen angeordnet. Am unteren Ende des zweiten Rahmenbauteils 5 ist ferner ein Befestigungselement 2 angeordnet, mit dem der Seitenwagen an einem Motorradrahmen 3 eines Motorrades angeordnet ist. Das erste Rahmenbauteil 4 und das zweite Rahmenbauteil 5 des Rahmens 1 des Seitenwagens erstrecken sich dabei im Wesentlichen vertikal von der Oberfläche des Bodens weg, auf dem sich das Motorrad mit dem Seitenwagen befindet. Das erste Rahmenbauteil 4 ist dabei mittels eines dritten Rahmenbauteils 6, welches sich horizontal zwischen dem oberen Ende des ersten und zweiten Rahmenbauteils 4, 5 erstreckt, mit dem zweiten Rahmenbauteil 5 verbunden.

Im vorliegenden Ausführungsbeispiel ist der Seitenwagen derart ausgebildet, dass das erste Rahmenbauteil 4 und das zweite Rahmenbauteil 5 senkrecht zu dem Boden, auf dem sich die zu bearbeitenden Pflanzkulturen befinden, stehen, während das dritte Rahmenbauteil parallel zu diesem Boden angeordnet ist. Hierdurch ist zwischen dem ersten Rahmenbauteil 4 und dem zweiten Rahmenbauteil 5 sowie dem dritten Rahmenbauteil 6 ein Freiraum 7 gebildet. Das erfindungsgemäße Motorrad kann nunmehr zwischen zwei Pflanzreihen hindurchfahren, ohne die Pflanzen dieser beiden Pflanzreihen zu beschädigen, während der Seitenwagen mit seinem Rad 10 ebenfalls zwischen zwei Pflanzreihen geführt wird. Dabei wird durch den Freiraum 7 nunmehr eine weitere Pflanzreihe beziehungsweise gegebenenfalls mehrere Pflanzreihen während der Bewegung des Fahrzeuggespanns aus Motorrad und Seitenwagen geführt, wobei diese Pflanzreihe beziehungsweise Pflanzreihen durch das erfindungsgemäße Fahrzeuggespann mit Motorrad und Seitenwagen ebenfalls nicht beschädigt werden. Insbesondere ist der Freiraum 7 derart ausgestaltet, dass das erfindungsgemäße Fahrzeuggespann-Motorrad mit Seitenwagen - zur Durchfahrt durch hochwachsende Kulturen, wie beispielsweise Maiskulturen oder dergleichen, ausgebildet ist.

Wie der Figur 1 zu entnehmen ist, weist der Rahmen 1 eine Aufnahme 8 auf, in welcher ein landwirtschaftliches Gerät 9 angeordnet werden kann. Zur biologischen Schädlingsbekämpfung bietet sich hierbei als landwirtschaftliches Gerät 9 ein Kapselwerfer an, mit dem beispielsweise das Ausbringen von Eiern der Schlupfwespe Trichogramma in Maisbestände realisiert werden kann. Auch wenn in diesem Ausführungsbeispiel nur diese biologische Schädlingsbekämpfung mittels eines als Kapselwerfer ausgebildeten landwirtschaftlichen Gerätes 9 beschrieben ist, ist der erfindungsgemäße Seitenwagen nicht darauf beschränkt. Vielmehr können auch andere landwirtschaftliche Geräte 9 in der Aufnahme 8 des Rahmens 1 des Seitenwagens angeordnet werden.

Da die zur Bearbeitung verwendeten landwirtschaftlichen Geräte 9 in der Regel sehr energieintensiv sind, ist es erfindungsgemäß vorgesehen, dass an dem Rahmen 1 des Seitenwagens ein Stromaggregat 11 angeordnet ist. Mithilfe dieses Stromaggregates 11 lässt sich nunmehr das landwirtschaftliche Gerät 9 betreiben. Auch wenn in diesem Ausführungsbeispiel nur ein elektrisch betriebenes landwirtschaftliches Gerät 9 beschrieben ist und somit ein Stromaggregat 11 zur Energieversorgung vorgesehen ist, ist die Anwendung nicht darauf beschränkt. Vielmehr kann zur Energieversorgung eines landwirtschaftlichen Gerätes 9 auch ein Energiespeicher oder auch ein motorischer Antrieb für das landwirtschaftliche Gerät 9 vorgesehen sein. Insbesondere kann ein Energiespeicher mittels eines Photovoltaikmoduls während des Betriebes aus der Sonnenenergie elektrischen Strom gewinnen, der in einem derartigen Energiespeicher gespeichert werden kann.

Das Rad 10 des Seitenanhängers ist im vorliegenden Ausführungsbeispiel mit dem Antrieb beziehungsweise den Rädern 14 und 15 des Motorrades, an dem der Seitenwagen angeordnet ist, synchronisierbar. Hierdurch wird ein Gleichlauf von Motorrad und Seitenwagen erreicht, ohne dass Ausgleichsbewegungen am Vorderrad 14 des Motorrades mittels des Lenkers 16 des Motorrades durchgeführt werden müssen.

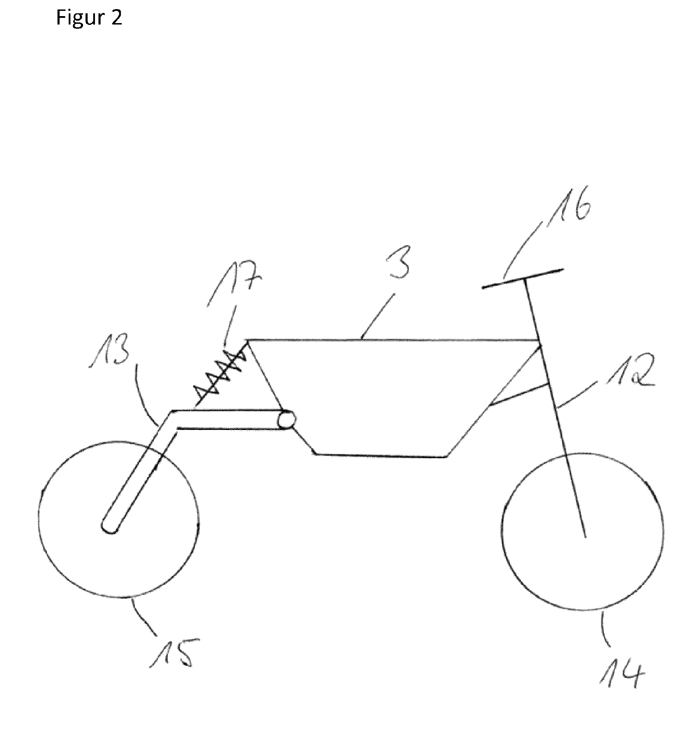

Figur 2 zeigt nunmehr ein Ausführungsbeispiel eines erfindungsgemäßen Motorrades, wobei aus Übersichtlichkeitsgründen der erfindungsgemäße Seitenwagen nicht dargestellt ist. Dieses Motorrad besteht im Wesentlichen aus einem Rahmen 3, an dem der Seitenwagen mit seinem Befestigungselement 2 angeordnet werden kann. An dem Motorradrahmen 3 ist an seinem vorderen Ende eine Vorderradgabel 12 angeordnet, an welcher zum einen das Vorderrad 14 des Motorrades und der Lenker 16 des Motorrades angeordnet ist. Am hinteren Ende des Motorradrahmens 3 ist die Hinterradgabel 13 mit dem Hinterrad 15 angeordnet. Im vorliegenden Ausführungsbeispiel ist die Hinterradgabel 13 mit einer Federung 17 an dem Motorradrahmen 3 befestigt, sodass ein Fahrzeugführer während des Betriebes des Motorrades etwas komfortabler auf dem Motorrad Platz nehmen kann.

Wie der Figur 2 zu entnehmen ist, ist der Motorradrahmen 3 dieses Motorrades deutlich höher angeordnet als bei handelsüblichen Motorrädern für einen Betrieb auf einer Straße oder im Gelände. Der Grund hierfür ist, dass während des Betriebes des Motorrades mit daran angeordnetem Seitenwagen ein Fahrzeugführer den Überblick über den zu bearbeitenden Pflanzenbestand behalten soll, insbesondere wenn mit dem erfindungsgemäßen Fahrzeuggespann die Durchfahrt durch hochwachsende Pflanzkulturen, wie beispielsweise Maiskulturen oder dergleichen, beabsichtigt ist.

### Bezugszeichenliste

- 1: Rahmen
- 2: Befestigungselement
- 3: Motorradrahmen
- 4: erstes Rahmenbauteil
- 5: zweites Rahmenbauteil
- 6: drittes Rahmenbauteil
- 7: Freiraum
- 8: Aufnahme
- 9: landwirtschaftliches Gerät
- 10: Rad
- 11: Stromaggregat
- 12: Vordergabel
- 13: Hintergabel
- 14: Vorderrad
- 15: Hinterrad
- 16: Lenker

## Patentansprüche

1. Seitenwagen für Motorräder mit einem Rahmen (1), der wenigstens ein Befestigungselement (2) zur Befestigung an einem Motorradrahmen (3) aufweist, wobei der Rahmen (1) drei Rahmenbauteile (4, 5, 6) aufweist, wobei das dritte Rahmenbauteil (6) das erste Rahmenbauteil (4) und das zweite Rahmenbauteil (5) an deren oberen Ende miteinander verbindet, wobei zwischen dem ersten Rahmenbauteil (4) und dem zweiten Rahmenbauteil (5) unterhalb des dritten Rahmenbauteils (6) ein Freiraum (7) gebildet ist, **dadurch gekennzeichnet, dass** der Rahmen (1) wenigstens eine Aufnahme (8) für ein land-, garten- oder forstwirtschaftliches Gerät (9) aufweist, welches während des Betriebes des Seitenwagens betrieben werden kann und zur Bearbeitung von hochwachsenden Pflanzen, die in dem Freiraum (7) aufnehmbar sind, ausgebildet ist.

2. Seitenwagen nach Anspruch 1, **dadurch gekennzeichnet, dass** das landwirtschaftliche Gerät (9) als Kapselwerfer ausgebildet ist.

3. Seitenwagen nach einem der vorhergehenden Ansprüche, **dadurch gekennzeichnet, dass** der Rahmen (1) zur Aufnahme eines Energiespeichers für elektrische Energie und/oder eines Stromaggregats (11) ausgebildet ist.

4. Seitenwagen nach einem der vorhergehenden Ansprüche, **dadurch gekennzeichnet, dass** er wenigstens ein Rad (10) aufweist, welches vorzugsweise motorisch antreibbar ausgebildet ist und das vorzugsweise mit dem Antrieb des mit dem Seitenwagen verbindbaren Motorrades synchronisierbar ist.

5. Seitenwagen nach Anspruch 4, **dadurch gekennzeichnet, dass** das wenigstens ein Rad (10) und/oder das land-, garten- oder forstwirtschaftliches Gerät (9) elektrisch, hydraulisch, pneumatisch oder mechanisch antreibbar ausgebildet ist.

6. Seitenwagen nach einem der vorhergehenden Ansprüche, **dadurch gekennzeichnet, dass** der Rahmen (1) mit seinem ersten Rahmenbauteil (4) und/oder seinem zweiten Rahmenbauteil (5) höhenverstellbar und/oder mit seinem dritten Rahmenbauteil (6) in seiner Breite verstellbar ausgebildet ist, wobei diese Verstellbarkeiten vorzugsweise elektrisch, hydraulisch, pneumatisch oder mechanisch ausgebildet sind.

7. Motorrad mit einem Seitenwagen nach einem der Ansprüche 1 bis 6.

8. Motorrad nach Anspruch 7, **dadurch gekennzeichnet, dass** das es zum autonomen und/oder ferngesteuerten Betrieb ausgebildet ist.

9. Motorrad nach Anspruch 7 oder 8, **dadurch gekennzeichnet, dass** entweder das Motorrad oder der Seitenwagen mit einem GPS-Empfänger ausgestatten ist.

10. Motorrad nach einem der Ansprüche 7 bis 9, **dadurch gekennzeichnet, dass** eine Vordergabel (12) und/oder eine Hintergabel (13) höhenverstellbar ausgebildet ist.

11. Motorrad nach einem der Ansprüche 7 bis 10, **dadurch gekennzeichnet, dass** die Lenkeinheit beziehungsweise der Lenker (16) höhenverstellbar ausgebildet ist.

12. Motorrad nach einem der Ansprüche 7 bis 11, **dadurch gekennzeichnet, dass** eine Sitzvorrichtung für einen Fahrzeugführer vorgesehen ist.

13. Motorrad nach Anspruch 12, **dadurch gekennzeichnet, dass** die Sitzvorrichtung für den Fahrzeugführer höhenverstellbar ausgebildet ist.
